# EUROPÄISCHE PATENTANMELDUNG

(11) **EP 1 832 560 A2**
(43) Veröffentlichungstag der Anmeldung: **12.09.2007**
(21) Anmeldenummer: 07103698.2
(22) Anmeldetag: 07.03.2007
(51) Int. Cl.: C03C 11/00, C04B 38/00

(54) **Verfahren zur Herstellung keramischer oder glasartiger Mikrohohlkugeln**

(30) Priorität: 07.03.2006 DE 102006011432
(71) Anmelder: Omega Minerals Germany GmbH, 22848 Norderstedt (DE); DBI GTI gGmbH, 09599 Freiberg (DE)
(72) Erfinder: Franke, Matthias, 01468, Moritzburg / Friedewald (DE); Choyna, Katrin, 09599, Freiberg (DE); Osthoff-Petrasch, Thomas, 22889, Tangstedt (DE); Dr. Werschy, Matthias, 09599, Freiberg (DE)
(74) Vertreter: Schneider, Henry

(57) **Zusammenfassung**

Aufgabe der Erfindung ist es, ein neues Herstellungsverfahren anzugeben, welches eine kostengünstige Produktion von keramischen oder glasartigen Mikrohohlkugeln auf verschiedenartiger Rohstoffbasis nach einheitlichem Prinzip mit reproduzierbaren Parametern und Produkteigenschaften ermöglicht.

Das erfindungsgemäße Verfahren ist gekennzeichnet durch folgende Verfahrensschritte: Bereitstellen eines mineralischen oder glasartigen Granulats und Einbringen von Körnern des Granulats in eine Flamme, wobei die Körner durch physikalisch-chemische Prozesse zu Mikrohohlkugeln aufgetrieben werden.

## Beschreibung

Die Erfindung betrifft ein neues, effektives und reproduzierbares Verfahren zur Herstellung von keramischen oder glasartigen Mikrohohlkugeln.

Mikrohohlkugeln dieser Art haben in verschiedenen Industriezweigen große wirtschaftliche Bedeutung erlangt. Hervorzuheben sind ihre große Temperaturbeständigkeit und ihre hohe chemische Resistenz, außerdem ihre Dämm- und Schallabsorptionswirkung. Anwendung finden sie insbesondere im Baustoffbereich (Fassaden- und Stuckelemente, brandbeständige Akustikdecken, Brandschutzsysteme) und in der Gießereitechnik (Dämmsysteme für Gießtechnologien). Auch Spachtelmassen und Kleber enthalten diese Zusatzmaterialien.

Die Entstehung von keramischen Mikrohohlkugeln erfolgt bisher lediglich zufällig als Anfallprodukt bei der Befeuerung von Kraftwerkskesseln als Aschebestandteile im Flammenstrom mit anschließendem Trennverfahren. Die Qualität und das Mengenaufkommen unterliegen deshalb weltweit großen Schwankungen. Ein eigenständiges Verfahren zur gezielten Herstellung gibt es bisher nicht.

Mikrohohlkugeln aus Borsilikatglas werden mit einem Rohstoffgemenge als Rohgranulat im Heißgasstrom erzeugt. Alternative Verfahren gibt es nach dem Stand der Technik nicht.

Aufgabe der Erfindung ist es, ein neues Herstellungsverfahren anzugeben, welches eine kostengünstige Produktion von keramischen oder glasartigen Mikrohohlkugeln auf verschiedenartiger Rohstoffbasis nach einheitlichem Prinzip mit reproduzierbaren Parametern und Produkteigenschaften ermöglicht.

Das erfindungsgemäße Verfahren ist gekennzeichnet durch folgende Verfahrensschritte:
Bereitstellen eines mineralischen oder glasartigen Granulats und Einbringen von Körnern des Granulats in eine Flamme, wobei die Körner durch physikalisch-chemische Prozesse zu Mikrohohlkugeln aufgetrieben werden. Voraussetzung dafür ist die Blähfähigkeit des Granulats, welche durch geeignete Wahl der chemischen Bestandteile gegeben ist. Idealerweise besitzen die entstehenden Mikrohohlkugeln folgende Parameter:
   für Anwendungen in der Hochtemperaturtechnik
      - Temperaturbeständigkeit > 1000°C und
      - Korngröße < 500 µm und
      - Schüttgewicht von < 1000 g/l und
      - Wärmeleitfähigkeit < 0,05 W/m/K und
      - Druckfestigkeit > 2 MPa
         sowie
         für Anwendungen in der Baustofftechnik
      - Temperaturbeständigkeit < 1000 °C und
      - Korngröße < 500 µm und
      - Schüttgewicht von < 500 g/l und
      - Wärmeleitfähigkeit < 0,03 W/m/K und
      - Druckfestigkeit > 2 Mpa.

Zumeist ist die Entstehung der Mikrohohlkugeln darin begründet, dass die Körner gelöste oder chemisch gebundene Gase enthalten oder durch thermische Zersetzung Gase abgeben, die beim Einbringen in die Flamme freigesetzt werden. Die chemische Zusammensetzung der für die im Herstellungsverfahren verwendeten Rohstoffe weist solche gelöste oder chemisch gebundene Gase wie zum Beispiel SO₃⁻, CO₂, O₂ oder B₂O₃ auf, welche durch Temperatureinwirkung oder Redox-Einfluss freigesetzt werden.

Beispiele für auftretende chemische Prozesse sind (nicht abschließende Aufzählung):
- Metalloxide (z. B. Fe₂O₃), welche im Hochtemperaturbereich beim Wechsel der Atmosphäre ihren Oxidationszustand vom höherwertigen zum niedrigeren Zustand als so genannten Redox-Wechsel ändern und dabei O₂ abspalten

   Fe₂O₃ + C → 2 FeO + ½ O₂ + CO
- Salze , die sich thermisch zersetzen, z. B.

   CaCO₃ → CaO + CO₂

   CaSO₄ → CaO + SO₃⁻

   BaCO₃ → BaO + CO₂

   BaSO₄ → BaO + SO₃⁻
- allgemein ähnliche, bekannte Reaktionsbeispiele nach den Reaktionsgleichungen

   RₓO_{y} + C → RₓO_{y} + CO_{y} + yO₂

   R = mehrwertiges Metall

   RₓO_{y} + CO → RₓO_{y} + yO₂+CO_{y}

   C = Kohlenstoff oder Reduktionsmittel

   RCO₃ → RO + CO₂

   RSO₄ → RO + SO₃⁻

   für x,y = ½ - 4
- chemisch gebundenes Wasser, welches durch Temperaturschock abgespalten wird, z. B. in Perlit oder Glimmer.

In bevorzugter Ausführungsform des Verfahrens ist vorgesehen, dass das Granulat Korngrößen im Bereich von 40 - 300 µm, insbesondere von 60 - 200 µm, aufweist. Liegt die Ausgangskorngröße innerhalb des angegebenen Bereiches, können die Zielgrößen für Korngröße, Dichte und damit auch für die Wärmeleitfähigkeit besonders gut erreicht werden.

Geeignete Rohstoffgrundlage für keramische Mikrohohlkugeln sind Granulate, welche folgende Materialien enthalten: Bims, Basalt, Perlit, Glimmer, Zement, Flugaschen, Schlacke, Feldspat, Ton, Mullit, Ziegelbruch oder ein ähnliches mineralisches Material. Für die Herstellung glasartiger Mikrohohlkugeln wird ein spezielles Borsilikat-Rohglas mit Gasüberfrachtung bereitgestellt oder Braunglas aus der Behälterglasproduktion oder Foamglas als Rohstoff verwendet.

Bevorzugt ist, dass die Körner mit einem Brennstoff- oder Luftstrom in den Flammenursprung eingebracht werden. Der Materialeintrag erfolgt somit im Brenner direkt in den Medienstrom oder auch in die Flammenwurzel.

Weiter ist bevorzugt, dass die Flamme einen Temperaturbereich von 1000 - 2000 °C, insbesondere von 1200 - 1800 °C aufweist. Optional ist dabei eine zusätzliche Sauerstoffzuführung in den Brennluftstrom, um Temperaturen bis 1800°C zu erreichen. Durch die räumliche Erfassung von Temperaturfeldern können eine sichere Prozessführung und reproduzierbare Produktkennwerte erreicht werden.

Bei gewissen Rohstoffen werden die erforderlichen chemischen Prozesse dadurch begünstigt, dass die Flamme atmosphärische Oxidations- und Reduktionsbereiche enthält. Die wechselnde Sauerstoffkonzentration über die Flammenlänge hinweg wird dabei für die Reaktion genutzt, wobei im Flammenkern ein höherer und am Flammenende ein geringerer Sauerstoffanteil vorliegt.

Das Verfahren stützt sich ganz allgemein auf die gezielte Auswahl der mineralischen Rohstoffvarianten für die Reaktionsbedingungen und auf die Prozessführung im Hochtemperaturbereich mit Atmosphärenwechsel im Flammenbereich. (Sauerstoffmangel oder Sauerstoffüberschuss). Dieser Wechsel erfolgt beim Durchgang der Partikel im Flammenstrom (Kern- und Randbereich) und beim Austritt in den Abgasstrom mit niedrigerer Temperatur als in der Flamme.

Die Mikrohohlkugeln werden bevorzugt nach Verlassen der Flamme mit einem Abgasstrom ausgetragen und durch kontinuierliches Absaugen aus dem Abgasstrom entnommen. Die Abgastemperatur liegt unter der Flammentemperatur, so dass eine Kühlung erfolgt, welche die entstandenen Mikrohohlkugeln stabilisiert. Diese Wirkung kann dadurch verstärkt werden, dass der Abgasstrom durch Kaltluft gekühlt wird. Der Abgasstrom wird sodann bevorzugt durch eine Filter- oder Sichtereinheit geleitet. Der Austrag erfolgt durch einen Filter oder Sichter, ein Zyklon kann auch Anwendung finden.

Um während der Ausführung des erfindungsgemäßen Verfahrens die für die Herstellung der Mikrohohlkugeln erforderliche Wärmeenergie optimal nutzbar zu machen, ist bevorzugt vorgesehen, dass die Flamme und/oder der Abgasstrom einen Prozessraum oder ein Prozessgut beheizen. Umgekehrt bedeutet dies, dass das erfindungsgemäße Verfahren bevorzugt in einer Thermoprozessanlage ausgeführt wird, welche bereits eine Feuerung besitzt, wie z. B. in einem Dampferzeuger, in welchem Dampf erzeugt und gleichzeitig die Mikrohohlkugeln hergestellt werden können.

Somit kann also das Verfahren mit einem gleichzeitigen Thermoprozessverfahren mit fossiler Beheizung im Sinne einer Wärmekopplung betrieben werden, wobei als Thermoprozessanlagen mit fossiler Beheizung zur Wärmekopplung folgende Prozessräume geeignet sind:
- Brennräume zur Energieerzeugung,
- indirekt beheizte Trocknungs- oder Prozessräume,
- Brennräume mit geschlossener Abgasführung.
Die Mikrohohlkugeln werden dabei aus dem abgeschlossenen Abgasstrom ausgetragen, das Prozessgut der Thermoprozessanlage wird nicht beeinträchtigt.

Die Erfindung betrifft außerdem Mikrohohlkugeln, welche gemäß dem erfindungsgemäßen Verfahren hergestellt werden und welche bevorzugt ein Schüttgewicht von < 1000 g/l, insbesondere von < 500 g/l, eine Wärmeleitfähigkeit von < 0,05 W/m/K, insbesondere von < 0,03 W/m/K, und eine isostatische Druckfestigkeit von > 1 MPa aufweisen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: einen Reaktorbrenner für keramische oder glasartige Mikrohohlkugeln;
- Figur 2: ein Reaktionsmodell zur Bildung keramischer und glasartiger Mikrohohlkugeln;
- Figur 3: eine Darstellung der Wärmeleitfähigkeit für Mikrohohlkugeln aus Perlit in Abhängigkeit von der Temperatur und
- Figur 4: eine Darstellung der isostatischen Druckfestigkeit für Mikrohohlkugeln aus Perlit.

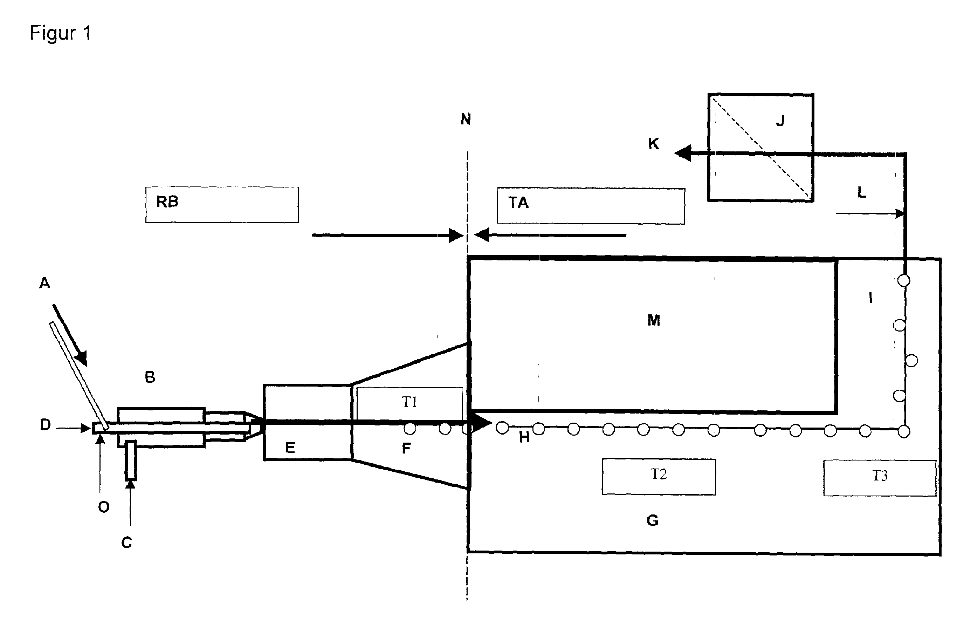

Figur 1 zeigt einen Reaktorbrenner (RB), der sich für die Herstellung keramischer oder glasartiger Mikrohohlkugeln eignet. Geeignete Rohstoffgrundlage für keramische Mikrohohlkugeln sind Granulat von Bims, Basalt, Perlit, Glimmer, Zement, Ton, Flugaschen, Schlacken, Feldspat, Mullit, Ziegelbruch oder ähnliche mineralischen Materialien. Für glasartige Mikrohohlkugeln wird ein spezielles Borsilikat-Rohglas mit Gasüberfrachtung hergestellt oder Braunglas aus der Behälterglasproduktion oder Foamglas oder Recyclingglas als Rohstoff verwendet. Die Rohstoffe werden als Feingranulat (A) in sandartiger Beschaffenheit mit Korngrößen im Bereich von 40 - 250 µm aufbereitet und dann vor einem Brenner (B) mit einem Brennstoff- (C) oder Luftstrom (D) direkt in den Flammenursprung (E) eingetragen, wo sie spontan unter dem Temperaturschock durch die hohe Flammentemperatur reagieren. Es wird dabei der gesamte Flammenbereich als Reaktionsraum genutzt. Die Reaktionen finden ausschließlich im Flammenstrom (F) im Temperaturbereich von 1200 - 1800 °C (T1) statt. Die Flamme brennt in einem Brennraum (G) aus. Dabei erweichen die mineralischen Partikel (A) entsprechend ihrem temperaturabhängigen Viskositätsverlauf. Die Gasfracht im Partikel entweicht, unter anderem durch den Redox-Wechsel der Atmosphäre in der Flamme (F) (Oxidation/Reduktion) und/oder durch thermische Zersetzung der Verbindung. Die austretenden Gasbläschen treiben die einzelnen, erweichten Partikel zur Hohlkugel (H) auf.

Beim Verlassen der Flamme kühlen die Hohlkugeln sofort ab (Temperatur T2) und werden im eingefrorenen Zustand mit dem Abgasstrom (I) (Temperatur T3) ausgetragen. Zur Anwendung kommt ein Filter (J) oder Sichter. Durch den Filter, welcher eine kontinuierliche Abscheidung hinter der Brennkammer sicherstellt, können 100 % Materialaustrag (K) erreicht werden. Der Abgasstrom wird vor dem Filter durch Kaltluft (L) gekühlt. Der Flammenbrand und die Abgase beheizen einen Prozessraum oder ein Prozessgut (M) in einer Thermoprozessanlage (TA). Die Herstellung der keramischen und glasartigen Mikrohohlkugeln erfolgt somit im Sinne einer Wärmekopplung (N) zwischen dem Reaktionsbrenner (RA) und der Thermoprozessanlage (TA).

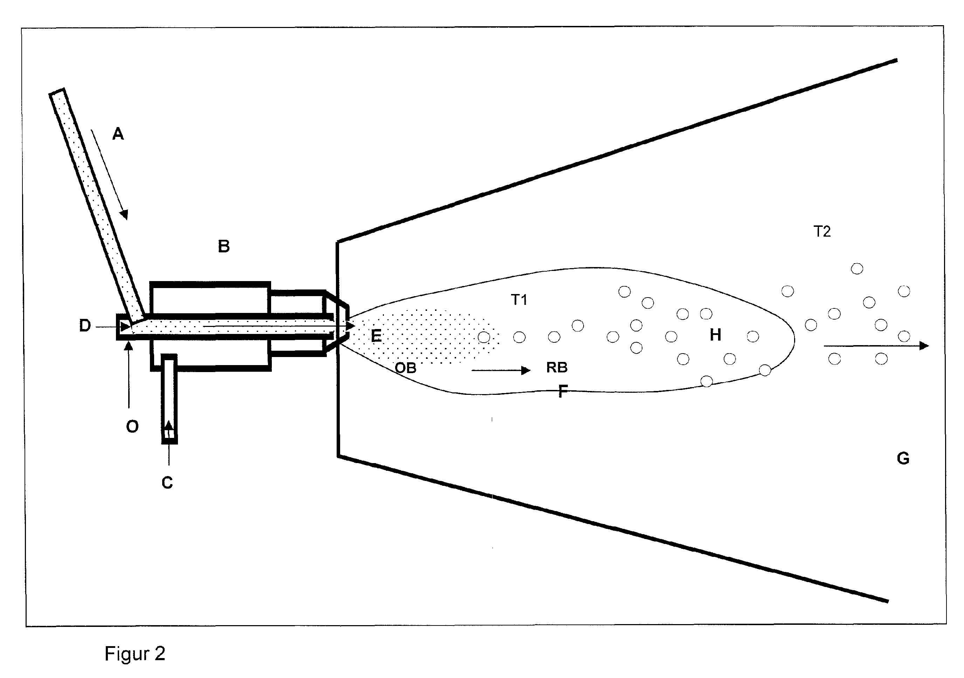

Figur 2 zeigt ein Reaktionsmodell zur Bildung keramischer und glasartiger Mikrohohlkugeln. Die Partikel werden im Flammenstrom (F) von einem (sauerstoffreichen) Oxidationsbereich (OB) in einen (sauerstoffarmen) Reduktionsbereich (RB) transportiert, wobei die Gasfreisetzung in den Partikeln durch den Wechsel zwischen den beiden Bereichen angestoßen wird.

Für eine Vielzahl von Rohstoffen stellt eine Ausgangskorngröße von 63 - 200 µm ein Optimum dar. Die Flammentemperatur, die Verweilzeit in der Flamme und die Ausgangskorngröße sind die wesentlichen Parameter für die Zielgrößen Dichte und Durchmesser. Die Farbe wird durch den Rohstoff selbst und durch den Redox-Zustand der Flamme beeinflusst.

Ein wesentlicher Produktkennwert ist die Wärmeleitfähigkeit. Die Berechnung der temperaturabhängigen Wärmeleitfähigkeit erfolgt aus der Temperaturleitfähigkeit, der spezifischen Wärmekapazität und der Dichte der Mikrohohlkugeln.

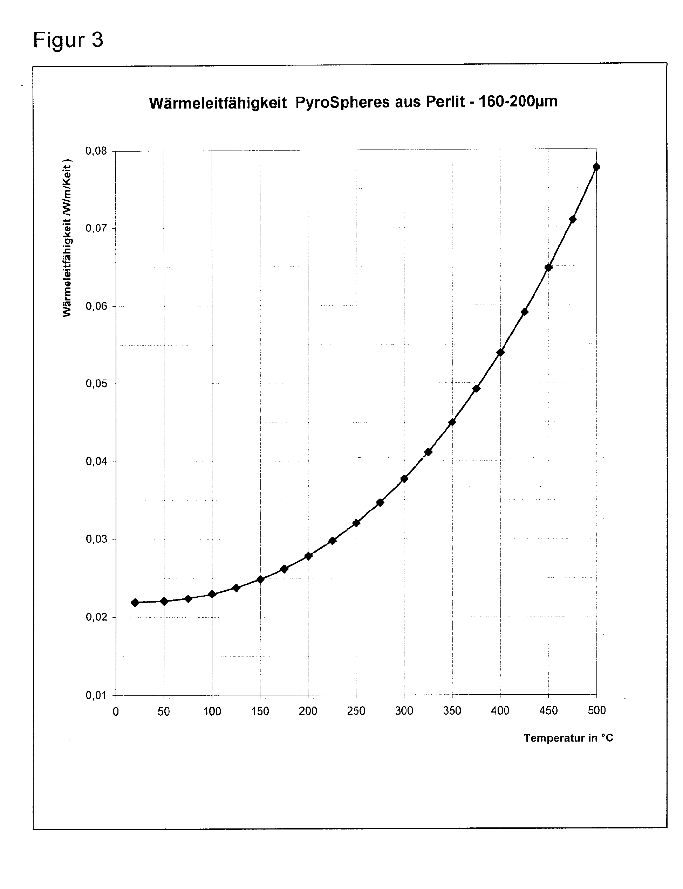

Figur 3 zeigt die Wärmeleitfähigkeit für Mikrohohlkugeln aus Perlite in Abhängigkeit von der Temperatur. Im Temperaturbereich zwischen 0 °C und 500°C steigt die Wärmeleitfähigkeit von Mikrohohlkugeln mit einer Krongröße von 160 - 200 µm von etwa 0,02 W/m/K auf etwa 0,08 W/m/K.

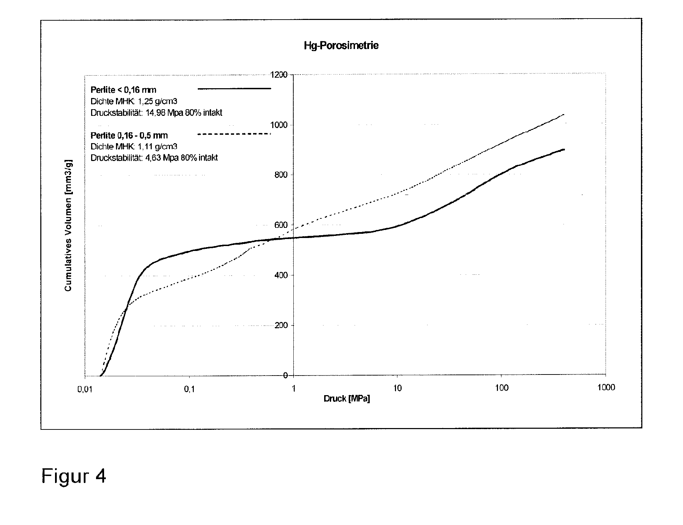

Figur 4 zeigt die isostatische Druckfestigkeit für Mikrohohlkugeln aus Perlite.

Zur Bewertung der Eigenschaften für die hergestellten Mikrohohlkugeln werden folgende Techniken und Charakterisierungsmethoden herangezogen:
· Lichtmikroskopie zur Bewertung von Farbe, Blähung und Korngröße,
· Quecksilber-Porosimetrie zur Ermittlung der Druckfestigkeit,
· Ermittlung der Dichte (Rohdichte, Schüttdichte),
· Ermittlung der Wärmeleitfähigkeit, Temperaturleitfähigkeit, spezifische Wärmekapazität,
· Ermittlung der Temperaturbeständigkeit (Halbkugeltemperatur im Erhitzungsmikroskop),
· Visuelle Inspektion der Kugelform (geschlossene oder offene Oberfläche, Kugel- oder Kantenform).

Es können folgende typische Parameter bei verschiedenen Ausgangsstoffen festgestellt werden:
• Perlit:

| | |
|---|---|
| Ausgangskorngröße: | 63 - 200 µm |
| Reaktionstemperatur: | 1500 °C |
| Verweilzeit in der Flamme: | 0,017 sec |
| Wärmeleitfähigkeit: | 0,023 W/m/K |
| Schüttdichte: | 0,22 g/cm³ |
| Farbe: | weiß |
| Isostatische Druckfestigkeit: | 14 MPa |
| Halbkugeltemperatur: | 1435 °C |

• Basalt

| | |
|---|---|
| Ausgangskorngröße: | 63 - 200 µm |
| Reaktionstemperatur: | 1580 °C |
| Verweilzeit in der Flamme: | 0,021 sec |
| Wärmeleitfähigkeit: | 0,04 W/m/K |
| Schüttdichte: | 0,61 g/cm³ |
| Farbe: | schwarz |
| Isostatische Druckfestigkeit: | 20 MPa |
| Halbkugeltemperatur: | 230 °C |

• Zement

| | |
|---|---|
| Ausgangskorngröße: | 63 - 200 µm |
| Reaktionstemperatur: | 1800 °C |
| Verweilzeit in der Flamme: | 0,020 sec |
| Wärmeleitfähigkeit: | 0,036 W/m/K |
| Schüttdichte: | 0,52 g/cm³ |
| Farbe: | hellbraun |
| Isostatische Druckfestigkeit: | 15 MPa |
| Halbkugeltemperatur: | 1556 °C |

• Borsilikatglas

| | |
|---|---|
| Ausgangskorngröße: | 63 - 200 µm |
| Reaktionstemperatur: | 1300 °C |
| Verweilzeit in der Flamme: | 0,015 sec |
| Wärmeleitfähigkeit: | 0,023 W/m/K |
| Schüttdichte: | 0,25 g/cm³ |
| Farbe: | weiß |
| Isostatische Druckfestigkeit: | 2 MPa |
| Halbkugeltemperatur: | 1050 °C |

Höhere und tiefere Reaktionstemperaturen in der Flamme für die genannten Beispiele führen zu steigenden Schüttdichten. Liegt die Ausgangskorngröße außerhalb des angegebenen Bereiches, können die Zielgrößen für Korngröße, Dichte und damit für die Wärmeleitfähigkeit nicht mehr erreicht werden. Verweilen die Partikel durch Turbulenz zu lange in der Flamme, oder ist die Temperatur zu hoch, platzen die Hohlkugeln durch den steigenden, inneren Druck der Bläschenbildung.

### Bezugszeichenliste

- RB: Reaktorbrenner
- TA: Thermoprozessanlage
- A: Feingranulat
- B: Brenner
- C: Gasstrom
- D: Luftstrom
- E: Flammenursprung
- F: Flammenstrom
- T1, T2, T3: Temperaturbereiche
- G: Brennraum
- H: Hohlkugeln
- I: Abgasstrom
- J: Filter, Zyklon
- K: Materialaustrag
- L: Kaltluft
- M: Prozessraum
- N: Wärmekopplung
- O: Sauerstoffzuführung
- OB: Oxidationsbereich
- RB: Reduktionsbereich

## Patentansprüche

1. Verfahren zur Herstellung von keramischen oder glasartigen Mikrohohlkugeln,
**gekennzeichnet durch** folgende Verfahrensschritte:
- Bereitstellen eines mineralischen oder glasartigen Granulats (A) und
- Einbringen von Körnern des Granulats (A) in eine Flamme (E, F), wobei die Körner **durch** physikalisch-chemische Prozesse zu Mikrohohlkugeln aufgetrieben werden.

2. Verfahren nach Anspruch 1,
**dadurch gekennzeichnet, dass**
die Körner gelöste oder chemisch gebundene Gase enthalten oder durch thermische Zersetzung Gase abgeben, die beim Einbringen in die Flamme freigesetzt werden.

3. Verfahren nach einem der vorangehenden Ansprüche,
**dadurch gekennzeichnet, dass**
das Granulat Korngrößen im Bereich von 40 - 300 µm, insbesondere von 60 - 200 mm, aufweist.

4. Verfahren nach einem der vorangehenden Ansprüche,
**dadurch gekennzeichnet, dass**
ein Korn des Granulats wenigstens überwiegend aus einer der folgenden Substanzen besteht: Bims, Basalt, Perlit, Glimmer, Zement, Ton, Flugaschen, Schlacke, Feldspat, Mullit, Ziegelbruch oder einem ähnlichen mineralischen Material.

5. Verfahren nach einem der Ansprüche 1 bis 3,
**dadurch gekennzeichnet, dass**
ein Korn des Granulats wenigstens überwiegend aus einer der folgenden Substanzen besteht:
Borsilikat-Rohglas, Braunglas, Schaumglas oder Recyclingglas.

6. Verfahren nach einem der vorangehenden Ansprüche,
**dadurch gekennzeichnet, dass**
die Körner mit einem Brennstoff- (C) oder Luftstrom (D) in den Flammenursprung (E) eingebracht werden.

7. Verfahren nach einem der vorangehenden Ansprüche,
**dadurch gekennzeichnet, dass**
die Flamme (E, F) einen Temperaturbereich von 1000 - 2000 °C, insbesondere von 1200 - 1800 °C aufweist.

8. Verfahren nach einem der vorangehenden Ansprüche,
**dadurch gekennzeichnet, dass**
die Flamme atmosphärische Oxidations- (OB) und Reduktionsbereiche (RB) enthält.

9. Verfahren nach einem der vorangehenden Ansprüche,
**dadurch gekennzeichnet, dass**
die Mikrohohlkugeln nach Verlassen der Flamme (E, F) mit einem Abgasstrom (I) ausgetragen werden.

10. Verfahren nach Anspruch 9,
**dadurch gekennzeichnet, dass**
der Abgasstrom (I) gekühlt wird, insbesondere vor einer Filterung/Sichtung und durch Kaltluft (L).

11. Verfahren nach Anspruch 9 oder 10,
**dadurch gekennzeichnet, dass**
der Abgasstrom (I) durch eine Filter- oder Sichtereinheit (J) geleitet wird.

12. Verfahren nach einem der vorangehenden Ansprüche,
**dadurch gekennzeichnet, dass**
die Flamme und/oder der Abgasstrom (I) einen Prozessraum oder ein Prozessgut (M) beheizen.

13. Mikrohohlkugeln, hergestellt gemäß einem Verfahren nach einem der vorangehenden Ansprüche.

14. Mikrohohlkugeln nach Anspruch 13,
**gekennzeichnet durch** ein Schüttgewicht von < 1000 g/l, insbesondere von < 500 g/l.

15. Mikrohohlkugeln nach Anspruch 13 oder 14,
**gekennzeichnet durch** eine Wärmeleitfähigkeit von < 0,05 W/m/K, insbesondere von < 0,03 W/m/K.

16. Mikrohohlkugeln nach einem der Ansprüche 13 bis 15, **gekennzeichnet durch** eine isostatische Druckfestigkeit von > 1 MPa.

17. Mikrohohlkugeln, hergestellt aus mineralischen Rohstoffen, bestehend zumindest überwiegend aus Bims, Basalt, Perlit, Glimmer, Zement, Ton, Flugasche, Schlacke, Feldspat, Mullit, Ziegelbruch oder aus einem ähnlichen mineralischen Materialien oder aus Borsilikat-Rohglas, Braunglas, Schaumglas oder Recyclingglas.
